# EUROPÄISCHE PATENTANMELDUNG

(11) **EP 1 835 045 A1**
(43) Veröffentlichungstag der Anmeldung: **19.09.2007**
(21) Anmeldenummer: 06005333.7
(22) Anmeldetag: 15.03.2006
(51) Int. Cl.: C23C 4/02, C23C 4/08, C23C 4/10, C23C 4/18, F01D 5/00

(54) **Verfahren zur Herstellung eines beschichteten Bauteils**

(71) Anmelder: SIEMENS AKTIENGESELLSCHAFT, 80333 München (DE); Albert-Ludwigs-Universität Freiburg, 79085 Freiburg (DE)
(72) Erfinder: Bergander, Katharina, 13503 Berlin (DE); Bolz, Andrea, 13591 Berlin (DE); Bostanjoglo, Georg, Dr., 12161 Berlin (DE); Förster, Ralf, Dr., 12623 Berlin (DE); Klein, Karsten, Dr., 14089 Berlin (DE); Malow, Thomas, Dr., 14109 Berlin (DE)

(57) **Zusammenfassung**

Die Erfindung betrifft ein Verfahren zur Herstellung eines beschichteten Bauteils (1), das einen Grundkörper (2) und eine darauf aufgebrachte Beschichtung (3) aufweist, wobei in dem Bauteil (1) wenigstens eine die Beschichtung (3) und den Grundkörper (2) durchsetzende Öffnung (4) vorgesehen ist, bei dem vor dem Beschichtungsvorgang in die wenigstens eine Öffnung (4) des Bauteils ein Maskierungselement (5) derart eingesetzt wird, dass das Maskierungselement (5) die Öffnung (4) verschließt und ein oberer Teil (5b) des Maskierungselements (5) aus der Öffnung (4) vorsteht, nach dem Einsetzen des Maskierungselements (5) die Beschichtung (3) flächig auf den Grundkörper (2) aufgebracht wird und anschließend das Maskierungselement (5) unter Belassung eines Öffnungsbereiches (4b) in der Beschichtung (3) entfernt wird, welches dadurch gekennzeichnet ist, dass der obere, aus dem zu beschichteten Bauteil (1) hervorstehende Teil (5b) des Maskierungselements (5) eine der Geometrie des in der (3) zu bildenden Öffnungsbereichs (4b) entsprechende Form hat.

## Beschreibung

Die Erfindung betrifft ein Verfahren zur Herstellung eines beschichteten Bauteils, das einen Grundkörper und eine darauf aufgebrachte Beschichtung aufweist, wobei in dem Bauteil wenigstens eine die Beschichtung und den Grundkörper durchsetzende Öffnung vorgesehen ist, bei dem vor dem Beschichtungsvorgang in die wenigstens eine Öffnung des Bauteils ein Maskierungselement derart eingesetzt wird, dass das Maskierungselement die Öffnung verschließt und ein oberer Teil des Maskierungselements aus der Öffnung vorsteht, nach dem Einsetzen des Maskierungselements die Beschichtung flächig auf den Grundkörper aufgebracht wird und anschließend das Maskierungselement unter Belassung eines Öffnungsbereiches in der Beschichtung entfernt wird.

Bauteile werden häufig hohen Temperaturen und einer korrosiven Atmosphäre ausgesetzt. Ein Beispiel dafür sind Turbinenschaufeln von Gasturbinen. Um die Lebensdauer von Turbinenschaufeln zu erhöhen, werden sie mit Kühlluftbohrungen versehen, aus denen während des Betriebes Luft ausströmt, die die Oberfläche der Turbinenschaufeln kühlt. Die Kühlluftbohrungen selbst weisen häufig einen speziell geformten Öffnungsbereich, beispielsweise in der Form eines Diffusors, auf, der ein optimiertes Strömungsverhalten der Kühlluft ermöglicht. Außerdem werden die Turbinenschaufeln mit Schutzbeschichtungen versehen, die als Wärmedämmschichten und/oder als Oxidationsschutzschichten wirken. In vielen Fällen werden auch kombinierte Mehrschichtsysteme aufgebracht.

Sowohl bei der Herstellung entsprechend beschichteter Turbinenschaufeln als auch bei der Neubeschichtung im Rahmen des Refurbishments besteht eine Schwierigkeit darin, die Beschichtung flächig auf das Bauteil aufzubringen, ohne gleichzeitig den Querschnitt der Kühlluftbohrungen durch Coat-down zu verengen. Deshalb werden vor der Beschichtung einfache runde Maskierungselemente in die Kühlluftbohrungen eingesetzt. Anschließend wird dann der Diffusoranteil der Kühlluftbohrungen in der Beschichtung ausgebildet. Dies gelingt heute zumeist durch Laserbearbeitung. Ein solches Verfahren ist z.B. in der EP 1 327 483 A1 beschrieben.

Die Herstellung des Diffusoranteils der Kühlluftbohrung mit Hilfe von Lasern ist einerseits aufwendig und kostenintensiv, und andererseits entstehen so genannte Recastlayers, die die Qualität der Beschichtung mindern.

In der EP 1 076 107 B1 ist ein weiteres Verfahren zum Verschließen von Kühlluftbohrungen vor einer Beschichtung beschrieben. Dabei wird zunächst die Oberfläche des Bauteils mit einem Maskierungsmaterial bedeckt, während gleichzeitig eine Flüssigkeit durch die Kühlluftbohrungen gedrückt wird. Das Maskierungsmaterial wird versteift und anschließend werden die Kühlluftbohrungen mit einem Stopfenmaterial verschlossen und das Maskierungsmaterial von der Oberfläche entfernt. Zuletzt erfolgt die Beschichtung und das Entfernen des Stopfenmaterials.

Das Verfahren besteht aus einer Vielzahl von Schritten und ist deshalb aufwendig. Außerdem garantiert es nicht, dass die gewünschte Geometrie des Diffusoranteils der Kühlluftbohrung bei der Beschichtung mit der nötigen Genauigkeit verwirklicht wird. Eine Nachbearbeitung mit Hilfe von Lasern ist unerlässlich.

Aufgabe der vorliegenden Erfindung ist es, ein beschichtetes Bauteil herzustellen, bei dem der zu bildende Öffnungsbereich unmittelbar während der Beschichtung ausgebildet wird und im Wesentlichen keine weitere Nachbearbeitung nötig ist.

Die Aufgabe wird erfindungsgemäß dadurch gelöst, dass der obere, aus dem zu beschichtenden Bauteil hervorstehende Teil des Maskierungselements eine der Geometrie des in der Beschichtung zu bildenden Öffnungsbereichs entsprechende Form hat. Grundgedanke der vorliegenden Erfindung ist es also, ein Maskierungselement zu verwenden, dessen oberer Teil die Form des in der Beschichtung zu bildenden Öffnungsbereiches hat, so dass während des Beschichtungsvorgangs im Bereich des Maskierungselements ein Öffnungsbereich ausgespart bleibt, welcher eine definierte gewünschte Form besitzt. Auf diese Weise ist im Allgemeinen keine aufwendige Nachbearbeitung des Öffnungsbereiches notwendig, was zu einer erheblichen Zeit- und Kostenersparnis führt. Auch werden die Probleme, die mit der Laserbearbeitung von Beschichtungen einhergehen vermieden. So entsteht weder eine so genannte Recastlayer, noch können Laserzunder die Beschichtung beschädigen. Ein weiterer Vorteil ist, dass mit dem erfindungsgemäßen Verfahren auch die Formgebung von Öffnungsbereichen an Stellen möglich ist, die für eine Laserbearbeitung aus geometrischen Gründen unzugänglich sind. Weitere Vorteile des erfindungsgemäßen Verfahrens sind, dass die Maskierungselemente aus verschiedensten Materialien hergestellt werden und nahezu beliebige Formen aufweisen können.

Die Verwendung von Maskierungselementen aus Graphit, einem ligninhaltigen Werkstoff oder einem Kunststoff aus einem nachwachsenden Rohstoff ist besonders günstig, da sie leicht und preiswert herzustellen sind und nach der Beschichtung durch oxidative Wärmebehandlung schnell und rückstandsfrei entfernt werden können. Dies kann beispielsweise durch Ausglühen oder auch erst während des Betriebs geschehen, da die Maskierungselemente dann ebenfalls verbrennen.

Das erfindungsgemäße Verfahren eignet sich besonders gut für Turbinenschaufeln, die Kühlluftbohrungen aufweisen, deren Öffnungsbereich in der Form eines Diffusors ausgebildet werden soll. In diesem Fall werden die Maskierungselemente in die bereits vorhandenen weitestgehend zylindrischen Kühlluftbohrungen eingesetzt und weisen die negative Form eines Diffusors auf.

Um zu verhindern, dass das Maskierungselement sich während der Beschichtung bewegen kann oder sogar vollständig entfernt wird, kann es vorteilhaft sein, wenn es in der Öffnung durch Passung oder Klebung fixiert wird.

In einer Ausführung des erfindungsgemäßen Verfahrens ist der Grundkörper bereits flächig mit einer Haftgrundschicht versehen, auf die dann, nach dem Einbringen des Maskierungselementes in die Öffnung, die Beschichtung aufgebracht wird. Auf diese Weise wird ein Bauteil erhalten, bei dem der Öffnungsbereich ausschließlich in der aufgebrachten Beschichtung ausgebildet ist.

Es ist auch möglich, dass die Beschichtung, die nach dem Anbringen der Maskierungselemente auf den Grundkörper aufgebracht wird, aus mehreren Schichten besteht. In diesem Fall kann die unmittelbar auf den Grundkörper aufgebrachte Schicht eine Haftgrundschicht sein, auf welche dann noch mindestens eine weitere Schicht, beispielsweise in der Form einer Wärmedämmschicht aufgebracht wird. Im Ergebnis erhält man ein beschichtetes Bauteil mit einer Öffnung, deren Öffnungsbereich sich durch mehrere Schichten erstreckt.

Insbesondere für Turbinenschaufeln kann es vorteilhaft sein, wenn die Haftgrundschicht aus MCrAlY besteht, wobei M aus der Gruppe Eisen, Kobalt und/oder Nickel und Y aus der Gruppe Yttrium, Lanthan oder Seltene Erden ausgewählt werden. Diese Art der Haftgrundschicht bietet eine sehr gute Oxidationsbeständigkeit.

In einer weiteren Ausführungsform der Erfindung kann die Beschichtung eine Wärmedämmschicht bilden oder aufweisen. Dies ist insbesondere für Bauteile wie Turbinenschaufeln sinnvoll, da sie hohen Temperaturen ausgesetzt werden. Es haben sich besonders Wärmedämmschichten aus voll- oder teilstabilisiertem Zirkoniumoxid bewährt. Möglich sind auch Keramiken mit stabilisierenden Elementen oder Komponenten.

Versuche haben gezeigt, dass die Beschichtung in effizienter Weise mittels APS, HVOF oder coldspray aufgebracht werden kann. Diese Methoden sind sehr gut für das Aufbringen von Haftgrundschichten oder Wärmedämmschichten auf Turbinenschaufeln geeignet.

In den Zeichnungen ist die Erfindung anhand von zwei Ausführungsbeispielen näher veranschaulicht.

In der Zeichnung zeigt:
- Figur 1: einen Querschnitt durch ein erfindungsgemäß hergestelltes Bauteil mit eingesetztem Maskierungselement,
- Figur 2: einen Querschnitt durch eine weitere erfindungsgemäß hergestelltes Bauteil mit eingesetztem Maskierungselement,
- Figur 3: eine Gasturbine,
- Figur 4: eine Turbinenschaufel und
- Figur 5: eine Brennkammer.

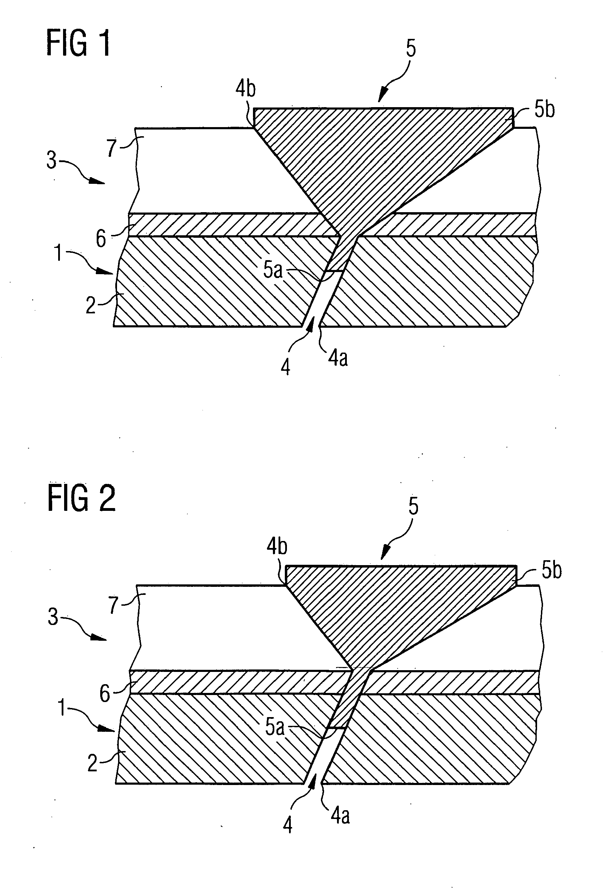

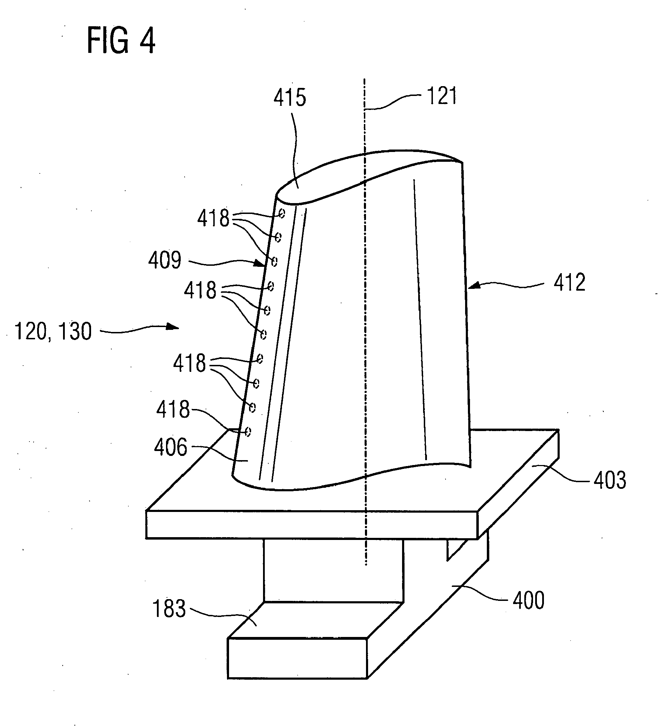

Die Figur 1 zeigt einen Ausschnitt einer erfindungsgemäß hergestellten Bauteils 1, das beispielsweise eine Turbinenschaufel, ein Teil einer Turbine oder ein Teil einer Brennkammer sein kann, das einen Grundkörper 2 und eine darauf flächig aufgebrachte Beschichtung 3 aufweist, wobei die Beschichtung 3 hier aus einer unteren Haftgrundschicht 6 und einer oberen Wärmedämmschicht 7 besteht. Eine Bohrung, hier eine Kühlluftbohrung 4, 418 (Fig. 4, durchsetzt sowohl den Grundkörper 2 als auch die Beschichtung 3. Die Kühlluftbohrung 4 besteht aus einer zylindrischen Bohrung 4a, die den Grundkörper 2 durchdringt, und einem Öffnungsbereich 4b, der in der Beschichtung 3 ausgebildet ist und Diffusorgeometrie aufweist. Ein Maskierungselement 5 ist mit einem unteren Teil 5a in die zylindrische Bohrung 4a der Kühlluftbohrung 4 eingesetzt und weist in einem oberen Teil 5b die Geometrie des Öffnungsbereichs 4b auf.

Um das erfindungsgemäße Bauteil 1 herzustellen, wird zuerst das Maskierungselement 5 mit dem unteren Teil 5a in die zylindrische Bohrung 4a des Grundkörpers eingesetzt und darin beispielsweise durch Klebung oder durch Passung fixiert, so dass es die Bohrung 4a vollständig verschließt. Anschließend wird die Haftgrundschicht 6, die beispielsweise aus MCrAlY bestehen kann, wobei M aus der Gruppe Eisen, Kobalt und/oder Nickel und Y aus der Gruppe Yttrium, Lanthan oder Seltene Erden ausgewählt werden, auf den Grundkörper 2 aufgebracht. Die Haftgrundschicht 6 wird dann mit der Wärmedämmschicht 7 beschichtet, welche beispielsweise aus voll- oder teilstabilisiertem Zirkoniumoxid bestehen kann. Als Verfahren für das Auftragen der Haftgrundschicht 6 und der Wärmedämmschicht 7 eignen sich etwa APS, HVOF oder coldspray. In einem letzten Schritt wird das Maskierungselement 5 unter Belassung eines Öffnungsbereiches 4b in der Beschichtung 3 entfernt.

Die Figur 2 zeigt einen der Figur 1 entsprechenden Ausschnitt eines weiteren erfindungsgemäß hergestellten Bauteils, das im Wesentlichen den gleichen Aufbau wie das in Figur 1 dargestellte Bauteil besitzt. Im Unterschied zu der in Figur 1 gezeigten Ausführungsform erstreckt sich die zylindrische Bohrung 4a der Kühlluftbohrung 4, 418 sowohl durch den Grundkörper 2 als auch durch die darauf befindliche Haftgrundschicht 6. Auf die Haftgrundschicht 6 ist eine Beschichtung 3 in Form einer Wärmedämmschicht 7 aufgebracht, in welcher der Öffnungsbereich 4b der Kühlluftbohrung 4 in der Form eines Diffusors ausgebildet ist.

Zur Herstellung des Bauteils 1 wird in einem ersten Schritt ein Maskierungselement 5 mit einem unteren Teil 5a in die zylindrische Bohrung 4a des mit der Haftgrundschicht 6 versehenen Grundkörpers 2 eingesetzt. Anschließend wird die Wärmedämmschicht 7 flächig auf der Haftgrundschicht 6 aufgebracht, wobei das Maskierungselement 5 mit seinem oberen Teil 5b einen diffusorförmigen Öffnungsbereich 4b in der Beschichtung 3 ausbildet. Zuletzt wird das Maskierungselement 5 entfernt.

Das Maskierungselement 3 kann aus verschiedenen Materialien hergestellt sein, wobei sich Graphit besonders gut eignet, da es im Anschluss an die Beschichtung durch oxidative Wärmebehandlung zu CO₂ rückstandsfrei verbrannt werden kann.

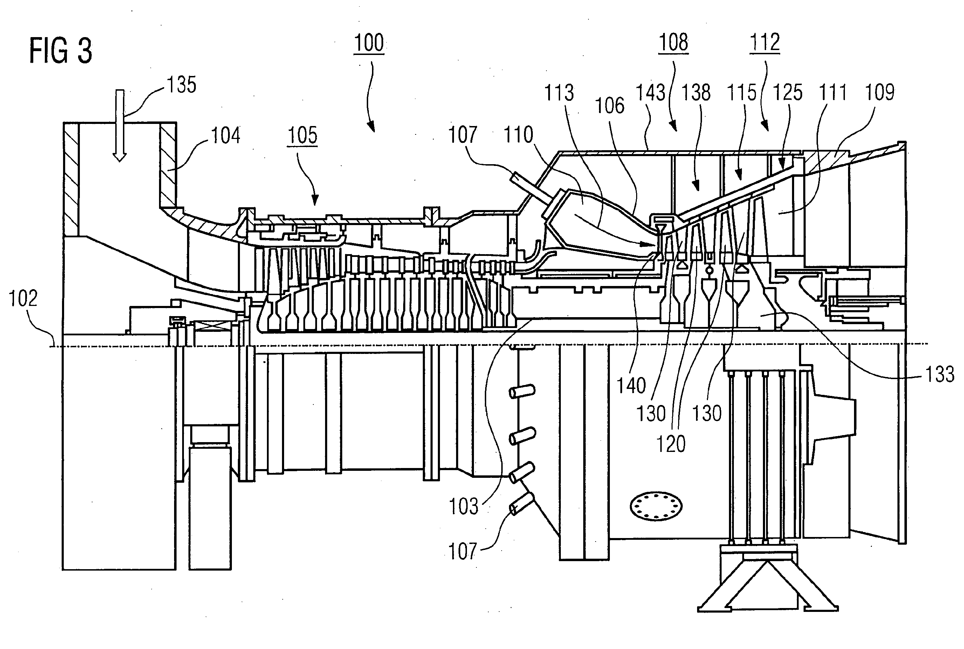

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108. '
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406. und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus Zr0₂, Y₂0₃-Zr0₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

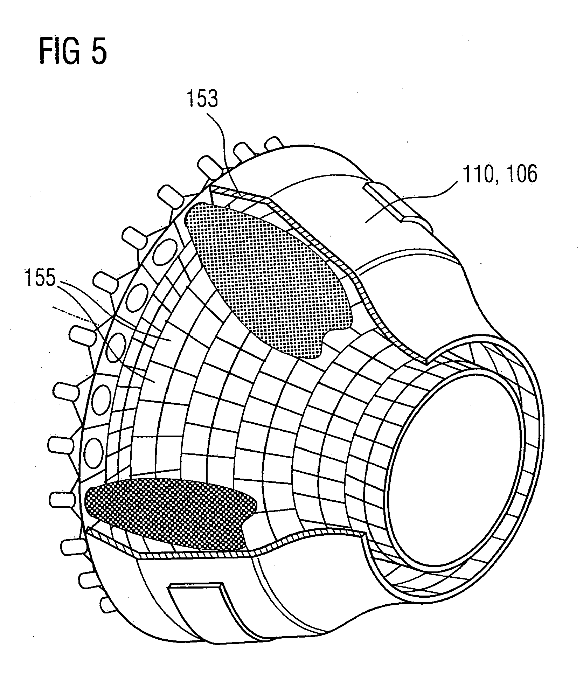

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung.Teil dieser Offenbarung sein sollen.

Auf der MCrAlX kann noch eine beispielsweise keramische Wärmedämmschicht vorhanden sein und besteht beispielsweise aus Zr0₂, Y₂0₃-Zr0₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Herstellung eines beschichteten Bauteils (1),
das einen Grundkörper (2) und eine darauf aufgebrachte Beschichtung (3) aufweist,
wobei in dem Bauteil (1) wenigstens eine die Beschichtung (3) und den Grundkörper (2) durchsetzende Öffnung (4) vorgesehen ist,
bei dem vor dem Beschichtungsvorgang in die wenigstens eine Öffnung (4) des Bauteils (1) ein Maskierungselement (5) derart eingesetzt wird,
dass das Maskierungselement (5) die Öffnung (4) verschließt und ein oberer Teil (5b) des Maskierungselements (5) aus der Öffnung (4) vorsteht,
nach dem Einsetzen des Maskierungselements (5) die Beschichtung (3) flächig auf den Grundkörper (2) aufgebracht wird,
und anschließend das Maskierungselement (5) unter Belassung eines Öffnungsbereiches (4b) in der Beschichtung (3) entfernt wird,
**dadurch gekennzeichnet, dass**
der obere, aus dem zu beschichteten Bauteil (1) hervorstehende Teil (5b) des Maskierungselements (5) eine der Geometrie des in der Beschichtung (3) zu bildenden Öffnungsbereichs (4b) entsprechende Form hat.

2. Verfahren nach Anspruch 1,
**dadurch gekennzeichnet, dass**
die Öffnung (4) eine Kühlluftbohrung ist.

3. Verfahren nach Anspruch 2,
**dadurch gekennzeichnet, dass**
der obere Teil (5b) des Maskierungselements (5) die negative Form eines Diffusors hat.

4. Verfahren nach einem der Ansprüche 1 bis 3,
**dadurch gekennzeichnet, dass**
das Bauteil (1) eine Turbinenschaufel ist.

5. Verfahren nach einem der Ansprüche 1 bis 4,
**dadurch gekennzeichnet, dass**
das Maskierungselement (5) durch Passung oder Klebung in der Öffnung (4) fixiert wird.

6. Verfahren nach einem der Ansprüche 1 bis 5,
**dadurch gekennzeichnet, dass**
das Maskierungselement (5) aus einem Material aus der Gruppe Graphit, ligninhaltiger Werkstoff oder Kunststoff aus einem nachwachsenden Rohstoff besteht.

7. Verfahren nach Anspruch 6,
**dadurch gekennzeichnet, dass**
das Maskierungselement (5) durch oxidative Wärmebehandlung entfernt wird.

8. Verfahren nach einem der Ansprüche 1 bis 7,
**dadurch gekennzeichnet, dass**
der zu beschichtende Grundkörper (2) flächig mit einer Haftgrundschicht (6) versehen ist und auf die Haftgrundschicht (6) nach dem Einbringen der Maskierungselemente (5) die Beschichtung (3) aufgebracht wird.

9. Verfahren nach einem der Ansprüche 1 bis 7,
**dadurch gekennzeichnet, dass**
die Beschichtung (3), welche nach dem Anbringen der Maskierungselemente (5) auf den Grundkörper (2) aufgebracht wird, aus mehreren Schichten besteht,
wobei die unmittelbar auf den Grundkörper (2) aufgebrachte Schicht eine Haftgrundschicht (6) ist.

10. Verfahren nach Anspruch 8 oder 9,
**dadurch gekennzeichnet, dass**
die Haftgrundschicht (6) aus MCrAlY besteht,
wobei M aus der Gruppe Eisen, Kobalt und/oder Nickel und Y aus der Gruppe Yttrium, Lanthan oder Seltene Erden ausgewählt werden.

11. Verfahren nach einem der vorherigen Ansprüche,
**dadurch gekennzeichnet, dass**
die Beschichtung (3) eine Wärmedämmschicht (7) bildet oder aufweist.

12. Verfahren nach Anspruch 11,
**dadurch gekennzeichnet, dass**
die Wärmedämmschicht (7) aus voll- oder teilstabilisiertem Zirkoniumoxid oder einer Keramik mit stabilisierenden Elementen oder Komponenten wie z.B. HfO₂ besteht.

13. Verfahren nach einem der Ansprüche 1 bis 12,
**dadurch gekennzeichnet, dass**
die Beschichtung (3) mittels APS, HVOF oder coldspray aufgebracht wird.
